# EUROPEAN PATENT SPECIFICATION

(11) **EP 1 025 632 B1**
(45) Date of publication and mention of the grant of the patent: **23.04.2003**
(21) Application number: 98955157.7
(22) Date of filing: 27.10.1998
(51) Int. Cl.: H02J 7/14

(54) **METHOD AND CIRCUIT FOR CONTROLLING CHARGING IN A DUAL BATTERY ELECTRICAL SYSTEM**
VERFAHREN UND EINRICHTUNG ZUR LADESTEUERUNG IN EINEM ELEKTRISCHEN SYSTEM MIT ZWEI BATTERIEN
PROCEDE ET CIRCUIT DE COMMANDE DE CHARGE D'UN SYSTEME ELECTRIQUE A DEUX BATTERIES

(30) Priority: 27.10.1997 US 63516 P
(43) Date of publication of application: 09.08.2000
(73) Proprietor: Johnson Controls Technology Company, Plymouth, Michigan 48170 (US)
(72) Inventor: DOUGHERTY, Thomas, J., Waukesha, WI 53188 (US); SEGALL, William, P., Grafton, WI 53024 (US); IVERSON, Michael, E., Milwaukee, WI 53223 (US); WATTS, Dan, L., Germantown, WI 53022 (US)
(74) Representative: James, Michael John Gwynne
(86) International application number: US9822789
(87) International publication number: WO99022434

(56) References cited:
- WO-A-88/08380
- DE-C- 4 138 943
- GB-A- 2 128 044
- GB-A- 2 302 622

## Description

### CROSS-REFERENCE TO RELATED APPLICATIONS

The priority of U.S. Provisional Application No. 60/063,516, filed October 27, 1997, and entitled "Dual Battery Electrical System" is claimed herein.

### TECHNICAL FIELD

The present invention relates generally to motor vehicle electrical systems and more particularly to a'dual battery electrical system for supplying electrical energy to the motor vehicle and for maintaining the charge of the dual battery system.

### BACKGROUND ART

Typically, vehicles powered by internal combustion engines have an electric starter motor for starting the engine. The starting motor is electrically connected to a starting circuit which receives electrical energy from an electric storage battery. When an ignition keyswitch is operated, power from the battery is supplied to the starting motor to turn over the internal combustion engine. In common vehicle applications, devices such as engine control electronics, lighting systems, and vehicle accessories, which present an electrical load to the battery, or to alternator, when the vehicle engine is running.

Traditional batteries are often referred to as starting, lighting and ignition (SLI) batteries. In design and construction, these are multi-cell, lead-acid batteries, which are constructed from lead plates carrying active material and arranged into stacks. The stacks are inserted into partitioned cell compartments of a battery container, electrically connected, and flooded with dilute acid electrolyte.

Starting requires high power output for a short time period. SLI batteries of this construction are more than adequate for providing the relatively high power demand required for engine starting.

Maintaining electrical loads in the vehicle both during vehicle operation and during periods of non-operation contributes a relatively lower power demand than starting. SLI battery design is difficult to optimized to perform, both short duration high-power output and long duration low-power output. An additional drawback of SLI batteries is relatively low specific energy (kilo-watt hours/grams (kWh/g)) as compared to other battery constructions owing to the weight of the lead plates and the liquid electrolyte.

More recently vehicle power systems have incorporated two batteries. A first battery in the system, a starting battery, is optimized for engine starting, that is, designed specifically for short duration, high-power output. A second battery in the system, a reserve battery, is optimized for operating and maintaining non-starting electrical loads. An advantage of such a system is that the starting battery may be made smaller and lighter yet capable of provide a high power output for a short period of time. In addition, the reserve battery may be made smaller and lighter, yet capable of satisfying the relatively low power requirements of the vehicle accessories. In combination, the two battery system can be designed to occupy less space and weigh less than a single traditional SLI battery.

Dual battery systems require control circuits to maintain the charge of both batteries in the system. Typically, the vehicle includes a regulation device which regulates the output of the alternator in response to the charging needs of the SLI battery and the vehicle electrical loads. In a dual battery system, each battery type delivers power and accepts charge at a different rate. For example, the starting battery delivers power at a very high rate and likewise accepts charge at a high rate. In contrast, the reserve battery delivers power at a lower rate and accepts charge at a lower rate. Each battery will typically exhibit a different state-of-charge, and hence require different charge maintenance. Additional advantages may also be attained by selectively coupling or decoupling the batteries during non-operational, starting and operational periods of the vehicle. However, careful management is required so as not to damage either the vehicle electrical system or the dual battery system.

Therefore, a dual-battery system for vehicle starting and operation that provides the advantages of reduced size and weight and includes power and charge management is needed.

Dougherty et al., U.S. Pat. No. 5,162,164, discloses a dual battery system in which two batteries are contained in a single casing. Thus, it should be understood that the identification of two batteries means, without limitation, containment in either separate casings or in one casing.

U.S. Patent No. 5,525,891 discloses a vehicle with a starting battery, a reserve battery and a charging/separating module that forms a charging circuit path which connects from the reserve battery to the starting battery. The charging circuit is connected and disconnected in response to the starter battery voltage, the reserve battery voltage, and the on/off state of the vehicle.

### SUMMARY OF THE INVENTION

The present invention provides a control circuit for a dual energy supply storage system for a vehicle. While the invention is described in terms of two batteries, it also contemplates systems in which a starting battery is replaced with a starting capacitor. The term "charge energy source" shall be used to include batteries, capacitors and other types of equivalent charge energy sources.

In various preferred embodiments of the present invention, battery control electronics, vehicle control electronics and combinations of these electronic control devices are utilized for battery charge management and enhanced system performance. For example, the system is adaptable to automatically determine charge status of the batteries in the system and to couple, as appropriate, the battery or batteries with sufficient charge to operate essential vehicle electrical loads and to provide energy for starting.

In addition, a preferred charge management strategy reduces the potential for overcharging one or more of the system batteries yet maintains each of the batteries at a ready state of charge.

These and other advantages and objects of the invention will be appreciated from the description that follows, in which reference is made to the accompanying drawings, which are a part of the teaching of the invention, and in which a preferred embodiment of the invention is illustrated. The description and illustration of the preferred embodiment is by way of example and not by way of limitation. For the various embodiments of the invention within the scope of the invention, reference is made to the claims which follow the description.

### BRIEF DESCRIPTION OF THE DRAWINGS

Fig. 1 is a block diagram illustration of a dual battery system adapted to an electrical system of a motor vehicle in accordance with a preferred embodiment of the present invention;
Fig. 2 is a detailed schematic illustration of a dual battery system controller in accordance with a preferred embodiment of the present invention; and
Fig. 3 is a detailed schematic diagram of a voltage boost circuit seen in Fig. 2.

### DETAILED DESCRIPTION OF THE PREFERRED EMBODIMENT

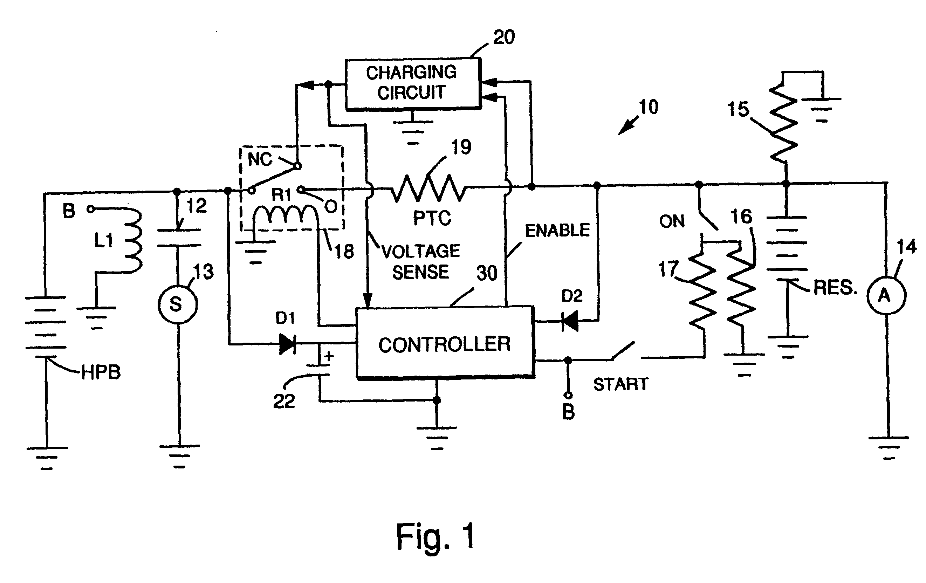

Referring to Fig. 1, a vehicle electrical system 10 includes a starting battery, also referred to as a high power battery (HPB). This refers to the high instantaneous or short burst of power which is needed to start the vehicle. The starting battery HPB is connected through a pair of switch contacts 12 to an electrical starter motor (S) 13. The starter motor 13 is mechanically coupled to the internal combustion engine (not shown) through an output shaft (not shown), and when starter motor 13 is rotated, it turns over the internal combustion engine to begin combustion of fuel in the presence of a spark.

The starting battery HPB is preferably a battery of recent technology which provides the necessary high starting power in a smaller package than traditional SLI batteries. Such a new type of starting battery is shown and described in copending U. S. Patent App. No. 08/870,803, filed June 6, 1997, assigned to the assignee of the present invention and entitled "Modular Electric Storage Battery,". Such a starting battery should typically provide 800 amps of current at a cranking voltage of 10.0 volts for startup, and have 4.5 amp-hours of reserve energy capacity.

The vehicle electrical system 10 also includes a reserve battery (RES.) which is preferably of the absorptive glass mat (AGM) type construction having high reserve capacity. The reserve battery RES. is adapted to provide a relatively low rate discharge for an extended period of time. The reserve battery typically may have a rating of twenty-three amp-hours of energy storage capacity, and a rating output of twenty-five amps at a nominal voltage of eleven volts.

Next to the reserve battery RES. is a conventional alternator (A) 14 which is a type of electrical generator driven by the internal combustion engine, to supply rectified DC power for charging the batteries and for operating other loads in the vehicle.

An ignition keyswitch with two switch positions "On" and "Start" is represented by two switches ON and START with corresponding labels in Fig. 1. The vehicle reserve battery RES. is connected to some resistive loads 15 (trunk light, for example), even when the ON switch is open (the "Off" position). Resistive load 16 represents the vehicle loads when the ignition keyswitch is operated to close the ON switch, which stays closed, during and after starting. The START switch is closed during starting, to supply electrical power from the alternator 14 through resistance 17, and is then opened.

Essential vehicle loads may include such loads as the vehicle engine/power train controller, lighting systems, braking system controller, safety system controller and the like which are powered during vehicle operation. Other vehicle loads may include entertainment systems, convenience features and others which are not essential or required for vehicle operation.

When the ignition keyswitch is moved to the "Start" position ("START" switch and "ON" switch closed), an ignition coil L1 is energized to close the starting contacts 12, and energy is supplied from the starting battery HPB to the starting motor 13.

During times when the vehicle engine is off, and at times after the vehicle is started, it is desired to charge the starting battery HPB. When the vehicle is being operated, such recharging of the battery is provided by the alternator 14. When the vehicle is off, such recharging can now be provided by the reserve battery RES.

In order to control the voltage and rate of charging of the starting battery HPB, it is coupled through a charging circuit 20, including a voltage boost circuit 21 to be described below. The charging circuit 20 is electrically connected to the starting battery HPB through a relay 18 having a normally closed (NC) position and an open (O) position represented by respective contacts "NC" and "O". With the relay 18 in the normally closed condition, the charging circuit 20 is connected to one side to the starting battery HPB. In order to be operable, however, the charging circuit 20 must also be connected to the reserve battery RES. to receive power, and the charging circuit 20 must be enabled by a signal on an ENABLE line running from an electronic controller 30. With the relay 18 energized, the charging circuit 20 is bypassed through an alternative circuit path including an optional PTC (positive temperature coefficient) resistance 19. This PTC resistance 19 acts as a time-dependent fuse and provides what is effectively an open circuit at certain thresholds of current flowing for corresponding periods of time, and then resets after current decreases sufficiently. A 9-amp polyswitch available from Raychem is one example of a suitable component for use for this purpose. The controller 30 is also connected to relay coil R1 to operate the relay 18. The controller 30 is further connected to sense the state of the keyswitch at one input. The controller 30 is also connected through diodes D1 and D2 to receive power from the batteries HPB, RES. A power supply capacitor 22 connects to the cathode of diode D1 in the circuit path coming from the starting battery HPB.

Controller 30 operates in accordance with a set of logic states or conditions, the logic and programming of which will be further explained below.

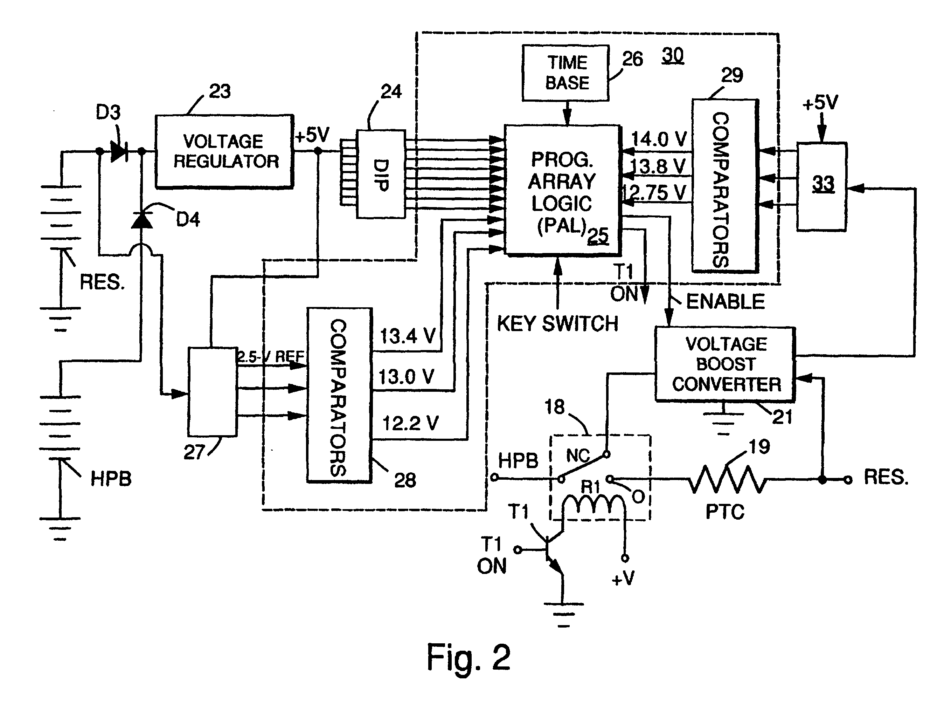

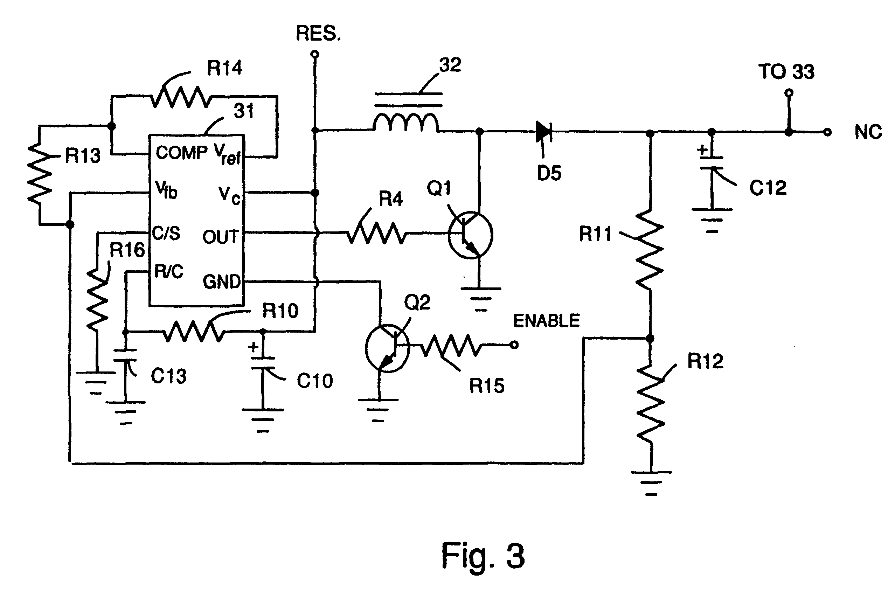

Referring next to Fig. 2, the vehicle electrical system 10 is shown in further detail concerning the charging circuit 20 and electronic controller 30. A detailed schematic of the voltage boost circuit 21 is illustrated in Fig. 3.

The reserve battery RES. connects through diode D3 to a voltage regulator 23 for providing a +5-volt voltage supply for powering electronics in circuitry shown in Fig. 2. A DIP switch 24 and pull-up resistors (not shown) are provided to provide a plurality of inputs to a programmable array logic (PAL) circuit 25 which provides the control logic for the overall circuitry shown in Figs. 1 and 2. The PAL circuit is preferably a PALCE22V10Z-25IP integrated circuit, available from Vantis, a successor of Advanced Micro Devices. A time base generator circuit 26 provides timing signals to the PAL circuit 25. The circuit 26 includes an ICM 7555 integrated timer circuit available from Harris Semiconductor. This circuit provides timing signals, such as a pulse train with a 5-second periodic waveform that is counted by the PAL circuit 25 to time longer delay periods.

The reserve battery RES. has its output connected to a divider circuit 27 for scaling the output to a +2.5-volt nominal level. The divider circuit 27 is provided by four pairs of two resistors in series, which forms a precision voltage divider with four ratios determined by the desired trip point of comparators 28. The comparators 28 are TCL2252IP dual op amps available from Texas Instruments. The comparators 28 compare the output of the reserve battery RES. to various thresholds including 12.2 DC volts, 13.1 DC volts and 13.4 DC volts, the significance of which will be explained below. The outputs of the comparators 28 are connected to inputs on the PAL circuit 25 to sense the voltage of the reserve battery RES.

The starting battery HPB in Fig. 2 is connected to the HPB switch input of the relay 18 seen in Fig. 2. The normally closed (NC) terminal in Fig. 2 is connected to a voltage boost circuit 21, which is a more detailed embodiment of the charging circuit 20 in Fig. 1. The voltage boost circuit 21 translates or converts the voltage of the reserve battery from its level at 13.1 to 13.4 volts up to a level such as 14.0 volts, representing the fully charged condition of the starting battery HPB. The voltage of the starting battery is sensed through the voltage boost circuit connection and through another set of comparators 29, which detect thresholds such as 14.0 DC volts, 13.8 DC volts and 12.75 DC volts for the starting battery HPB, the significance of these thresholds being explained below. The same type of commercial circuits can be used for comparators 29, as were described above for comparators 28. A second voltage divider circuit 33 is connected between the output of the voltage boost converter 21 and the inputs to the comparators 29. The voltage divider circuit 33 is formed of resistor pairs to scale the comparator trip points to a nominal +2.5 volts.

Fig. 2 shows that the PAL circuit 25 controls operation of the relay 18 through a TI ON signal which is applied to a base of a transistor T1 to switch on the transistor T1 and allow current flow through the relay coil R1.

Fig. 3 shows the voltage boost circuit 21, which is constructed around a pulse width modulator (PWM) circuit 31, which is provided by a UC3844N integrated circuit available from Unitrol and by a 20 µH inductor 32. The inductor 32 is connected on one side to the Vc pin on the PWM circuit 31 and on its other side to a collector of a transistor Q1. An output pin on the PWM circuit controls the base of transistor Q1 for switching the transistor Q1. The output of the inductor 32 is connected through diode D5 to the NC contact of the relay 18 (Fig. 2). The PWM circuit 31 is enabled through an ENABLE line from the controller 30 which switches on a transistor Q2 to provide a ground path for PWM circuit 31. The PWM circuit 31 has appropriate biasing networks to control the signal from the OUTPUT terminal which controls the output of the inductor 32. The inductor 32 has the voltage of the reserve battery RES. fed to an input side, and the output is controlled by the PWM circuit 31. The switching on and off of the PWM circuit causes the voltage at the output of the inductor to increase to a level higher than the 13.1 to 13.4 volts seen at the reserve battery. The switching produces an output voltage of about 14.0 DC volts. The output of the inductor 32 is coupled to the comparators seen in Fig. 2 for sensing the voltage level of the starting battery. The output of the inductor 32 is also connected to the normally closed (NC) contact of the relay 18 which, when the relay in the normally closed state, is connected to the starting battery HPB.

### Operation

The vehicle engine is defined as having three states: 1) rest, 2) starting and 3) running. The controller 30 senses these states by sensing the state of the ignition switch represented by the ON and START switches in Fig. 1.

When the vehicle is at rest and the voltage of the starting battery decreases to a preselected level, such as 12.75 DC volts, this signifies that the vehicle has been off for an extended period of time such as one month. Then, the charging circuit 20 is enabled to allow reserve battery RES. to charge the starting battery HPB, provided the reserve battery is at a voltage of at least 12.2 DC volts signifying its charge level. One of the comparators 28 senses the 12.2-volt threshold for the reserve battery RES. One of the comparators 29 senses the 12.75-volt threshold for the starting battery HPB. The charging circuit 20 is enabled for a period of time determined by logic in the PAL 25 and voltage sensing of the HPB battery.

When the vehicle engine is running, this is sensed by the controller 30, and provided that the reserve battery RES. voltage exceeds the +13.4-volt upper threshold, the relay 18 will be energized to cause the relay moveable contact to contact the open position contact. During this twenty minute period, charge will flow from the alternator 14 to both the reserve battery RES. and the starting battery HPB through the PTC resistor 19. When the timer times out or when the reserve battery falls below the 13.1-volt threshold, this indicates the reserve battery is too low to be used to recharge the starting battery. The relay 18 will be in the normally closed (NC) position, but the ENABLE signal to the charging circuit 20 will be disabled to disconnect the starting battery 14 from receiving charge from the reserve battery RES. This will allow the alternator 14 to charge the reserve battery RES. and it will protect against discharge through the starting battery HPB. Conversely, if the starting battery voltage rises above the 14.0-volt threshold for greater than a predetermined period of time, this represents a fully charged condition for the starting battery HPB and it will no longer accept charge from the reserve battery RES., so the relay 18 will be deenergized and the charging circuit 20 is disabled to protect the charge condition of the reserve battery RES. and to prevent overcharging of the starting battery.

When the charge on the starting battery HPB falls below 13.8 volts, and assuming the vehicle engine is running, the PAL circuit 25 will energize the relay 18 to allow the charging of the starting battery HPB from the alternator 14 through PTC resistor 19.

A third function is provided when the car is starting. If the controller 30 senses that the reserve battery is below some threshold such that the reserve battery is dead, it will not start on the first operation of the ignition switch, but will start on the second try.

It should be appreciated that in an alternate embodiment, the components shown within the dashed lines in Fig. 2 as the controller 30 can be replaced with an equivalent microelectronic CPU, suitably programmed to provide the functions described herein. Some external timing circuit would be required to provide timing signals to such a CPU circuit. Such a circuit may have analog-to-digital inputs for sensing battery voltage levels.

And, while in the illustrated embodiments, a relay 18 is the switchable device controlling the connection of the starting battery HPB to various charging sources, it should be understood that various types and numbers of semiconductor devices could be substituted to perform this function without departing from the scope of the invention.

It will be appreciated that threshold voltages are representative of preferred voltages and that various vehicle systems may require different voltage thresholds. Likewise, the various timer values are representative of preferred values although other values may be chosen without departing from the scope of the present invention. Furthermore, it will be understood that other details of the preferred embodiment and the alternate embodiment may be varied without departing from the scope of the invention as defined by the following claims.

## Claims

1. A circuit for controlling the charging of a starting charge energy source in a vehicle and for controlling a supply of charge from a reserve charge energy source in the vehicle, the circuit including a charging circuit (20) in a circuit path between the starting charge energy source (HPB) and the reserve charge energy source (RES) for converting a voltage of the reserve charge energy source (RES) to a voltage necessary to fully charge the starting charge energy source (HPB), and a controller (30) operably connected to sense the level of charge on the starting charge energy source (HPB) and on the reserve charge energy source (RES), said controller (30) enabling and disabling the charging circuit (20) to connect and disconnect the starting charge energy source (HPB) to the charging circuit (20) in response to the level of voltage on the starting charge energy source (HPB), in response to the level of voltage on the reserve charge energy source (RES), and in response to an on-off state of a vehicle engine, the circuit being **characterized by**:
a switchable device (18) connected in the circuit path from the starting charge energy source (HPB) to the reserve charge energy source (RES), said switchable device (18) being switchable to disconnect the starting charge energy source (HPB) from the charging circuit (20) and to connect the starting charge energy source (HPB) to the reserve charge energy source (RES) and an alternator (14).

2. The circuit of claim 1, wherein the controller (30) is further operable to connect the reserve charge energy source (RES) to the starting charge energy source (HPB) through the charging circuit (20) in response to a vehicle off condition as represented by a level of voltage on the starting charge energy source (HPB).

3. The circuit of claim 1, wherein the controller (30) is further operable to couple the charge current from the reserve charge energy source (RES) to the starting charge energy source (HPB) for a predetermined time period in response to a vehicle on condition.

4. The circuit of claim 1, wherein the switchable device is a relay.

5. The circuit of claim 1, further comprising a circuit path from the alternator (14) via said switchable device (18) to the starting charge energy source (HPB) , and further comprising a current limiting device (19) in said circuit path.

6. The circuit of claim 5, wherein the current limiting device (19) is a positive temperature coefficient resistance in said circuit path.

7. The circuit of claim 1, wherein the controller (30) includes a programmable logic circuit and a timing circuit.

8. The circuit of claim 1, wherein the starting charge energy source (HPB) is optimized for a high rate of discharge during vehicle starting operations.

9. The circuit of claim 1, wherein the reserve charge energy source (RES) is optimized for total energy capacity.

10. The circuit of claim 1, wherein the controller (30) is operable to detect a voltage potential of one of the starting charge energy source (HPB) and the reserve charge energy source (RES) with respect to a threshold and to selectively decouple the reserve charge energy source (RES) from the starting charge energy source (HPB) upon detection of said voltage potential relative to said threshold.

11. The circuit of claim 10, wherein the threshold represents a fully charged condition for the starting charge energy source (HPB).

12. The circuit of claim 10, wherein the threshold is a battery low condition for the reserve charge energy source (RES).

13. The circuit of claim 1, wherein the starting charge energy source (HPB) is a battery.

14. The circuit of claim 1, wherein the reserve charge energy source (RES) is a battery.

15. A method for controlling the charging of a starting charge energy source in a vehicle and for controlling a supply of charge from a reserve charge energy source in the vehicle, the method comprising:
sensing the level of charge on the starting charge energy source;
sensing the level of charge on the reserve charge energy source;
sensing the on-off state of a vehicle engine;
selectively either electrically connecting the starting charge energy source to the reserve charge energy source through a charging circuit or electrically connecting the starting charge energy source to the reserve energy source and to an alternator, by passing the charging circuit, in response to the level of voltage on the starting charge energy source, in response to the level of voltage on the reserve charge energy source, and in response to the on-off state of the vehicle engine; and
by means of said charging circuit, converting a voltage of the reserve charge energy source to a voltage necessary to fully charge the starting charge energy source.

16. The method of claim 15, wherein the connecting of the starting charge energy source through the charging circuit to the reserve charge energy source is in response to a vehicle off condition as represented by the level of voltage on the starting charge energy source.

17. The method of claim 15, wherein the connecting of the starting charge energy source through the charging circuit to the reserve charge energy source is for a predetermined time period in response to a vehicle on condition.

18. The method of claim 15, further comprising detecting a voltage potential of one of the starting charge energy source and the reserve charge energy source with respect to a threshold and selectively electrically disconnecting the reserve charge energy source from the starting charge energy source upon detection of said voltage potential relative to said threshold.

## Patentansprüche

1. Schaltung zum Steuern des Ladens einer Starter-Ladungsenergiequelle eines Kraftfahrzeuges und zum Steuern einer Ladungszuführung von einer Reserve-Ladungsenergiequelle des Kraftfahrzeuges, wobei der Schaltkreis folgendes umfaßt, eine Ladeschaltung (20) in einem Schaltungspfad zwischen der Starter-Ladungsenergiequelle (HPB) und der Reserve-Ladungsenergiequelle (RES) zum Umsetzen einer Spannung von der Reserve-Ladungsenergiequelle (RES) in eine Spannung, die zum vollständigen Laden der Starter-Ladungsenergiequelle (HPB) notwendig ist, und eine Steuerung (30), welche funktionell derart angeschlossen ist, daß diese einen Ladestand der Starter-Ladungsenergiequelle (HPB) und der Reserve-Ladungsenergiequelle (RES) mißt, wobei die Steuerung (30) die Ladeschaltung (20) Ein- und Ausschaltet, um in Abhängigkeit von dem Spannungspegel der Starter-Ladungsenergiequelle (HPB), in Abhängigkeit von dem Spannungspegel der Reserve-Ladungsenergiequelle (RES) und in Abhängigkeit von einem An-Aus-Zustand eines Kraftfahrzeugtriebwerkes die Starter-Ladungsenergiequelle (HPB) mit der Ladeschaltung (20) zu verbinden oder von dieser zu trennen, wobei die Schaltung **gekennzeichnet ist durch**:
eine schaltbare Vorrichtung (18), welche in den Schaltungspfad von der Starter-Ladungsenergiequelle (HPB) zu der Reserve-Ladungsenergiequelle (RES) geschaltet ist, wobei die schaltbare Vorrichtung (18) zum Trennen der Starter-Ladungsenerglequelle (HPB) von der Ladeschaltung (20) und zum Verbinden der Starter-Ladungsenergiequelle (HPB) mit der Reserve-Ladungsenergiequelle (RES) und einer Drehstromlichtmaschine (14) schaltbar ist.

2. Schaltung nach Anspruch 1, **dadurch gekennzeichnet, daß** die Steuerung (30) ferner derart ausgebildet ist, daß diese in Abhängigkeit von einem Aus-Zustand des Kraftfahrzeuges, welcher von einem Spannungspegel der Starter-Ladungsenergiequelle (HPB) gegeben ist, die Reserve-Ladungsenergiequelle (RES) über die Ladeschaltung (20) mit der Starter-Ladungsenergiequelle (HPB) verbindet.

3. Schaltung nach Anspruch 1, **dadurch gekennzeichnet, daß** die Steuerung (30) ferner derart ausgebildet ist, daß diese in Abhängigkeit von einem An-Zustand des Kraftfahrzeuges den Ladestrom von der Reserve-Ladungsenergiequelle (RES) mit der Starter-Ladungsenergiequelle (HPB) für eine vorbestimmte Zeit verbindet.

4. Schaltung nach Anspruch 1, **dadurch gekennzeichnet, daß** die schaltbare Vorrichtung ein Relais ist.

5. Schaltung nach Anspruch 1, **dadurch gekennzeichnet, daß** ein Schaltungspfad von der Drehstromlichtmaschine (14) über die schaltbare Vorrichtung (18) zur Starter-Ladungsenergiequelle (HPB) vorgesehen und eine Strombegrenzungsvorrichtung (19) in diesem Schaltungspfad angeordnet ist.

6. Schaltung nach Anspruch 5, **dadurch gekennzeichnet, daß** die Strombegrenzungsvorrichtung (19) ein Widerstand mit positivem Temperaturkoeffizienten ist, der in dem Schaltungspfad angeordnet ist.

7. Schaltung nach Anspruch 1, **dadurch gekennzeichnet, daß** die Steuerung (30) eine programmierbare Logikschaltung und eine Taktschaltung umfaßt.

8. Schaltung nach Anspruch 1, **dadurch gekennzeichnet, daß** die Starter-Ladungsenergiequelle (HPB) für eine hohe Entladungsrate während des Startvorgangs des Kraftfahrzeuges optimiert ist.

9. Schaltung nach Anspruch 1, **dadurch gekennzeichnet, daß** die Reserve-Ladungsenergiequelle (RES) auf eine Gesamtenergiekapazität optimiert ist.

10. Schaltung nach Anspruch 1, **dadurch gekennzeichnet, daß** die Steuerung (30) derart ausgebildet ist, daß diese ein Spannungspotential der Starter-Ladungsenergiequelle (HPB) oder der Reserve-Ladungsenergiequelle (RES) bzgl. eines Schwellwertes detektiert und wahlweise die Reserve-Ladungsenergiequelle (RES) von der Starter-Ladungsenergiequelle (HPB) trennt, wenn das Spannungspotential relativ zum Schwellwert detektiert wird.

11. Schaltung nach Anspruch 10, **dadurch gekennzeichnet, daß** der Schwellwert eine vollständig geladene Starter-Ladungsenergiequelle (HPB) repräsentiert.

12. Schaltung nach Anspruch 10, **dadurch gekennzeichnet, daß** der Schwellwert einen Entladezustand der Reserve-Ladungsenergiequelle (RES) repräsentiert.

13. Schaltung nach Anspruch 1, **dadurch gekennzeichnet, daß** die Starter-Ladungsenergiequelle (HPB) eine Batterie ist.

14. Schaltung nach Anspruch 1, **dadurch gekennzeichnet, daß** die Reserve-Ladungsenergiequelle (RES) eine Batterie ist.

15. Verfahren zum Steuern des Ladens einer Starter-Ladungsenergiequelle in einem Fahrzeug und zum Steuern einer Ladungszuführung von einer Reserve-Ladungsenergiequelle des Kraftfahrzeuges, mit folgenden Schritten:
Messen des Ladezustands der Starter-Ladungsenergiequelle;
Messen des Ladezustands der Reserve-Ladungsenergiequelle;
Messen des An-Aus-Zustandes des Fahrzeugtriebwerkes;
wahlweise entweder elektrisch Verbinden der Starter-Ladungsenergiequelle mit der Reserve-Ladungsenergiequelle über eine Ladeschaltung oder elektrisch Verbinden der Starter-Ladungsenergiequelle mit der Reserve-Ladungsenergiequelle und einer Drehstromlichtmaschine unter Umgehung der Ladeschaltung in Abhängigkeit von dem Spannungspegel der Starter-Ladungsenergiequelle, in Abhängigkeit von dem Spannungspegel der Reserve-Ladungsenergiequelle und in Abhängigkeit von dem An-Aus-Zustandes des Fahrzeugtriebwerkes; und
Umsetzen einer Spannung der Reserve-Ladungsenergiequelle mittels der Ladeschaltung in eine Spannung, welche zum vollständigen Laden der Starter-Ladungsenergiequelle erforderlich ist.

16. Verfahren nach Anspruch 15, **dadurch gekennzeichnet, daß** das Verbinden der Starter-Ladungsenergiequelle mit der Reserve-Ladungsenergiequelle über eine Ladeschaltung in Abhängigkeit von einem Aus-Zustand des Kraftfahrzeuges, der von dem Spannungspegel der Starter-Ladungsenergiequelle repräsentiert wird, ausgeführt wird.

17. Verfahren nach Anspruch 15, **dadurch gekennzeichnet, daß** das Verbinden der Starter-Ladungsenergiequelle mit der Reserve-Ladungsenergiequelle über die Ladeschaltung für eine vorbestimmte Zeitspanne in Abhängigkeit von einem Fahrzeugzustand ausgeführt wird.

18. Verfahren nach Anspruch 15, **dadurch gekennzeichnet, daß** ein Spannungspotential von der Starter-Ladungsenergiequelle oder der Reserve-Ladungsenergiequelle bzgl. eines Schwellwertes detektiert und wahlweise die Reserve-Ladungsenergiequelle (RES) von der Starter-Ladungsenergiequelle (HPB) trennt, wenn das Spannungspotential relativ zum Schwellwert detektiert wird.

## Revendications

1. Circuit de commande de la charge d'une source d'énergie de charge au démarrage dans un véhicule et de commande d'une alimentation de charge à partir d'une source d'énergie de charge de réserve dans le véhicule, le circuit comprenant un circuit de charge (20) dans un trajet de circuit entre la source d'énergie de charge au démarrage (HPB) et la source d'énergie de charge de réserve (RES) pour convertir une tension de la source d'énergie de charge de réserve (RES) en une tension nécessaire pour charger pleinement la source d'énergie de charge au démarrage (HPB), et un organe de commande (30) connecté fonctionnellement pour détecter le niveau de charge sur la source d'énergie de charge au démarrage (HPB) et sur la source d'énergie de charge de réserve (RES), ledit organe de commande (30) mettant en service et hors service le circuit de charge (20) pour connecter et déconnecter la source d'énergie de charge au démarrage (HPB) au circuit de charge (20) en réponse au niveau de tension sur la source d'énergie de charge au démarrage (HPB), en réponse au niveau de tension sur la source d'énergie de charge de réserve (RES), et en réponse à un état marche-arrêt d'un moteur de véhicule, le circuit étant **caractérisé par**:
- un dispositif commutable (18), connecté dans le trajet de circuit de la source d'énergie de charge au démarrage (HPB) à la source d'énergie de charge de réserve (RES), ledit dispositif commutable (18) étant commutable pour déconnecter la source d'énergie de charge au démarrage (HPB) du circuit de charge (20) et pour connecter la source d'énergie de charge au démarrage (HPB) à la source d'énergie de charge de réserve (RES) et à un alternateur (14).

2. Circuit selon la revendication 1, dans lequel l'organe de commande (30) est en outre actionnable pour connecter la source d'énergie de charge de réserve (RES) à la source d'énergie de charge au démarrage (HPB) par l'intermédiaire du circuit de charge (20) en réponse à une condition d'arrêt du véhicule telle que représentée par un niveau de tension sur la source d'énergie de charge au démarrage (HPB).

3. Circuit selon la revendication 1, dans lequel l'organe de commande (30) est en outre actionnable pour coupler le courant de charge de la source d'énergie de charge de réserve (RES) à la source d'énergie de charge au démarrage (HPB) pendant une période de temps prédéterminée en réponse à une condition de marche du véhicule.

4. Circuit selon la revendication 1, dans lequel le dispositif commutable est un relais.

5. Circuit selon la revendication 1, comprenant en outre un trajet de circuit de l'alternateur (14) via ledit dispositif commutable (18) à la source d'énergie de charge au démarrage (HPB), et comprenant en outre un dispositif (19) de limitation du courant dans ledit trajet de circuit.

6. Circuit selon la revendication 5, dans lequel le dispositif (19) de limitation du courant est une résistance à coefficient de température positif dans ledit trajet de circuit.

7. Circuit selon la revendication 1, dans lequel l'organe de commande (30) comprend un circuit logique programmable et un circuit de temporisation.

8. Circuit selon la revendication 1, dans lequel la source d'énergie de charge au démarrage (HPB) est optimisée pour une intensité élevée du courant de décharge pendant les opérations de démarrage du véhicule.

9. Circuit selon la revendication 1, dans lequel la source d'énergie de charge de réserve (RES) est optimisée pour une capacité énergétique totale.

10. Circuit selon la revendication 1, dans lequel l'organe de commande (30) est actionnable pour détecter un potentiel de tension de l'une parmi la source d'énergie de charge au démarrage (HPB) et la source d'énergie de charge de réserve (RES) par rapport à un seuil et pour découpler sélectivement la source d'énergie de charge de réserve (RES) de la source d'énergie de charge au démarrage (HPB) lors de la détection dudit potentiel de tension par rapport audit seuil.

11. Circuit selon la revendication 10, dans lequel le seuil représente une condition de pleine charge pour la source d'énergie de charge au démarrage (HPB).

12. Circuit selon la revendication 10, dans lequel le seuil est une condition basse de la batterie pour la source d'énergie de charge de réserve (RES).

13. Circuit selon la revendication 1, dans lequel la source d'énergie de charge au démarrage (HPB) est une batterie.

14. Circuit selon la revendication 1, dans lequel la source d'énergie de charge de réserve (RES) est une batterie.

15. Procédé de commande de la charge d'une source d'énergie de charge au démarrage dans un véhicule et de commande d'une alimentation de charge à partir d'une source d'énergie de charge de réserve dans le véhicule, le procédé comprenant les opérations consistant à :
- détecter le niveau de charge sur la source d'énergie de charge au démarrage ;
- détecter le niveau de charge sur la source d'énergie de charge de réserve ;
- détecter l'état marche-arrêt du moteur du véhicule ;
- sélectivement soit connecter électriquement la source d'énergie de charge au démarrage à la source d'énergie de charge de réserve par l'intermédiaire d'un circuit de charge, soit connecter électriquement la source d'énergie de charge au démarrage à la source d'énergie de charge de réserve et à un alternateur, en by-passant le circuit de charge, en réponse au niveau de tension sur la source d'énergie de charge au démarrage, en réponse au niveau de tension de la source d'énergie de charge de réserve, et en réponse à l'état marche-arrêt du moteur du véhicule ; et
- au moyen dudit circuit de charge, convertir une tension de la source d'énergie de charge de réserve en une tension nécessaire pour charger pleinement la source d'énergie de charge au démarrage.

16. Procédé selon la revendication 15, dans lequel la connexion de la source d'énergie de charge au démarrage par l'intermédiaire du circuit de charge à la source d'énergie de charge de réserve est en réponse à une condition d'arrêt du véhicule, telle que représentée par le niveau de tension sur la source d'énergie de charge au démarrage.

17. Procédé selon la revendication 15, dans lequel la connexion de la source d'énergie de charge au démarrage par l'intermédiaire du circuit de charge à la source d'énergie de charge de réserve est pendant une période de temps prédéterminée en réponse à une condition de marche du véhicule.

18. Procédé selon la revendication 15, comprenant en outre les opérations consistant à détecter un potentiel de tension de l'une parmi la source d'énergie de charge au démarrage et la source d'énergie de charge de réserve par rapport à un seuil, et sélectivement à déconnecter électriquement la source d'énergie de charge de réserve de la source d'énergie de charge au démarrage lors de la détection dudit potentiel de tension par rapport audit seuil.
